# EUROPÄISCHE PATENTSCHRIFT

(11) **EP 2 441 607 B1**
(45) Veröffentlichungstag und Bekanntmachung des Hinweises auf die Patenterteilung: **10.07.2013**
(21) Anmeldenummer: 10290542.9
(22) Anmeldetag: 11.10.2010
(51) Int. Cl.: B60H 1/00

(54) **Luftführungsvorrichtung für eine elektrochemische Energiespeichereinheit und Herstellungsverfahren zum Herstellen einer Luftführungsvorrichtung**
Air guidance device for an electrochemical energy storage unit and method for manufacturing an air guidance device
Dispositif de transport d'air pour une unité de stockage d'énergie électrochimique et procédé de fabrication d'un dispositif de transport d'air

(43) Veröffentlichungstag der Anmeldung: 18.04.2012
(73) Patentinhaber: Behr France Rouffach SAS, 68250 Rouffach (FR)
(72) Erfinder: Mehul, Xavier, 67560 Rosheim (FR)
(74) Vertreter: Grauel, Andreas

(56) Entgegenhaltungen:
- EP-A1- 1 609 701
- DE-A1- 10 340 638
- DE-U1- 8 133 960
- US-A- 4 835 982

## Beschreibung

Die vorliegende Erfindung bezieht sich auf eine Luftführungsvorrichtung für eine elektrochemische Energiespeichereinheit sowie ein Herstellungsverfahren zum Herstellen einer Luftführungsvorrichtung für eine elektrochemische Energiespeichereinheit. Eine derartige Luftführungsvorrichtung kann beispielsweise in einer Klimaanlage bzw. einem HVAC-System (HVAC = Heating, Ventilation and Air Conditioning) zur Batteriekühlung eingesetzt werden.

Um eine einwandfreie Funktion zu gewährleisten, sollte eine Temperatur einer Batterie in einem Elektrofahrzeug beim Betrieb des Elektrofahrzeugs auf einem möglichst konstanten Niveau liegen.

Es ist die Aufgabe der vorliegenden Erfindung, eine verbesserte Luftführungsvorrichtung für eine elektrochemische Energiespeichereinheit sowie ein verbessertes Herstellungsverfahren zum Herstellen einer Luftführungsvorrichtung für eine elektrochemische Energiespeichereinheit zu schaffen.

Diese Aufgabe wird durch eine Luftführungsvorrichtung sowie ein Herstellungsverfahren gemäß den unabhängigen Ansprüchen gelöst.

US 4,835,982 zeigt eine Luftführungsvorrichtung gemäß dem Oberbegriff des Anspruchs 1.

Der vorliegenden Erfindung liegt die Erkenntnis zugrunde, dass durch Verwendung eines fluiddichten Dichtstoffes zur Abdichtung von einzelnen Komponenten eine gegen Flüssigkeit und Partikel abgedichtete Luftführungsvorrichtung realisiert werden kann, die beispielsweise an eine Außenfläche des Fahrzeugbodens montiert werden kann.

Vorteilhafterweise kann so Bauraum gespart werden, da ein gemäß dem hier vorgestellten Ansatz entworfener HVAC außerhalb des Fahrzeuginnenraums eingesetzt werden kann. Ein weiterer Vorteil ist dadurch gegeben, dass im Falle einer erforderlichen Reparatur oder Wartung eines entsprechenden HVAC alle Elemente schnell und gut zu erreichen sind. Auch sind keine zusätzlichen Bauteile erforderlich, um den erfindungsgemäßen Ansatz umzusetzen.

Die vorliegende Erfindung schafft eine Luftführungsvorrichtung für eine elektrochemische Energiespeichereinheit, wobei die Temperiervorrichtung die folgenden Merkmale aufweist:
einen wannenförmigen Gehäusekörper mit zumindest einer Lufteingangsöffnung und einer Luftausgangsöffnung, wobei der Gehäusekörper in seinem Inneren ein Luftführungselement mit einer Wärmetauschereinheit aufweist, wobei die Lufteingangsöffnung und das Luftführungselement derart positioniert sind, dass Luft von der Lufteingangsöffnung in einen Innenbereich zwischen einer Innenwand des Gehäusekörpers und einer Außenwand des Luftführungselementes strömt, wobei das Luftführungselement ausgebildet ist, um über eine Luftaufnahmeöffnung die Luft von dem Innenbereich aufzunehmen und an die Wärmetauschereinheit zu leiten, wobei das Luftführungselement ferner ausgebildet ist, um die Luft nach Passieren der Wärmetauschereinheit durch die Luftausgangsöffnung aus dem Gehäusekörper herauszuleiten;
einen Gehäusedeckel, der ausgebildet ist, um auf den Gehäusekörper aufgesetzt zu werden; und
ein Dichtelement, das ausgebildet ist, um zwischen den Gehäusekörper und den Gehäusedeckel eingefügt zu werden, oder das zwischen den Gehäusekörper und den Gehäusedeckel eingefügt ist, um die Luftführungsvorrichtung zu bilden.

Die Luftführungsvorrichtung muss nicht zwingend mit dem Wärmetauscher realisiert werden, um die erfindungsgemäßen Vorteile nutzen zu können. Wird die Luftführungsvorrichtung jedoch mit einem Wärmetauscher realisiert, wie er vorstehend beschrieben ist, handelt es sich um eine Temperiervorrichtung, Eine solche Temperiervorrichtung kann beispielsweise eingesetzt werden, um den Akkumulator eines Elektrofahrzeugs entweder zu erwärmen oder zu kühlen. Um eine einwandfreie Funktionsfähigkeit des Akkumulators zu gewährleisten, sollte eine Temperatur des Akkumulators beim Betrieb des Elektrofahrzeugs stets auf einem konstanten Niveau bleiben. So kann es erforderlich sein, dass nach dem Starten des Elektrofahrzeugs der Akkumulator erwärmt werden sollte, während nach längerer Fahrt in der Regel der Akkumulator gekühlt werden sollte. Um diese Zwecke zu erfüllen, kann die Temperiervorrichtung beispielsweise einen Kaltleiter zur Erzeugung einer Heizfunktion und einen Verdampfer zur Erzeugung einer Kühlfunktion aufweisen, die je nach aktuellem Bedarf abwechselnd eingesetzt werden können.

Der wannenförmige Gehäusekörper kann in etwa die Form eines Quaders ohne Deckseite aufweisen und beispielsweise aus einem Metall oder einem Kunststoffmaterial im Gießverfahren hergestellt sein. Die Lufteingangsöffnung und die Luftausgangsöffnung können beispielsweise alles runde Durchgangsöffnungen in einer oder mehreren Seitenwänden des Gehäusekörpers realisiert sein. Das Luftführungselement kann aus demselben Material wie der Gehäusekörper gebildet sein und in seinem Inneren eine schneckenförmige Führung zum Leiten der Luft zu der Wärmetauschereinheit aufweisen. Die Luftaufnahmenöffnung kann beispielsweise ausgebildet sein, um die Luft aus dem Innenbereich in die Führung des Luftführungselementes einzusaugen. Die Wärmetauschereinheit kann den Kaltleiter und den Verdampfer aufweisen, die beispielsweise in Serie hintereinander geschaltet sind. Die Wärmetauschereinheit kann mit einer Hauptseite benachbart zu einer Außenwand des Luftführungselements und mit einer gegenüberliegenden Hauptseite benachbart zu der Luftausgangsöffnung angeordnet sein, so dass die Luft in Abhängigkeit einer eingestellten Funktionalität der Wärmetauschereinheit entweder gekühlt oder erwärmt aus der Luftausgangsöffnung herausströmen kann. Der Gehäusedeckel kann aus demselben Material wie der Gehäusekörper hergestellt sein und eine umlaufende Nut aufweisen, um passgenau auf den Gehäusekörper aufgesetzt zu werden. Das Dichtelement kann beispielsweise als ein Ring in einer Größe eines Außenumfangs des Gehäusekörpers und/oder des Gehäusedeckels ausgebildet sein, um passgenau zwischen den Gehäusekörper und den Gehäusedeckel eingefügt werden zu können.

Gemäß einer Ausführungsform kann das Dichtelement ein Kautschukmaterial, insbesondere Ethylen-Propylen-Dien-Kautschuk, aufweisen. Ethylen-Propylen-Dien-Kautschuk ist ein terpolymeres Elastomer, das sich durch Eigenschaften wie hohe Elastizität, hohe Feuchtigkeitsbeständigkeit und hohe thermische sowie chemische Beständigkeit auszeichnet. Die Verwendung des Kautschukmaterials bzw. des Ethylen-Propylen-Dien-Kautschuks bietet den Vorteil, dass damit die Temperiervorrichtung so gut gegen Spritzwasser und Schmutz, die beim Fahren von einem Fahrbahnuntergrund aufgewirbelt werden, abgedichtet werden, kann, dass die Temperiervorrichtung vorteilhafterweise an der Außenseite des Fahrzeugsbodens angebracht sein kann.

Gemäß einer weiteren Ausführungsform können die Lufteingangsöffnung und die Luftausgangsöffnung in unterschiedlichen Seitenwänden des Gehäusekörpers angeordnet sein. Auf diese Weise behindern sich die Luftzufuhr zu der Temperiervorrichtung und die Luftabfuhr aus der Temperiervorrichtung nicht gegenseitig, da beispielsweise die benötigten Rohrleitungen nicht benachbart zueinander verlaufen.

Ferner kann die Temperiervorrichtung eine weitere Lufteingangsöffnung aufweisen, die in einer anderen Seitenwand des Gehäusekörpers angeordnet ist als die Lufteingangsöffnung und die Luftausgangsöffnung. Dies bietet den Vorteil einer besseren und schnelleren Verteilung der der Temperiervorrichtung zugeführten Luft, so dass ein höherer Wirkungsgrad der Temperiervorrichtung erzielt werden kann.

Gemäß einer Ausführungsform können die Lufteingangsöffnung und die Luftausgangsöffnung in einer selben Seitenwand des Gehäusekörpers angeordnet sein. Wenn die Temperiervorrichtung eine weitere Lufteingangsöffnung aufweist, können auch die Lufteingangsöffnung, die weitere Lufteingangsöffnung und die Luftausgangsöffnung in einer selben Seitenwand des Gehäusekörpers angeordnet sein. Dies kann einen einfacheren Anschluss der Zuleitungs- und Ableitungsrohre bei geringerem erforderlichem Bauraum ermöglichen.

Gemäß der Erfindung weist die Wärmetauschereinheit ein Heizelement und ein von dem Heizelement getrenntes Kühlelement auf. Dabei sind das Heizelement und das Kühlelement in Bezug auf einen Luftstrom von der Lufteingangsöffnung und/oder der weiteren Lufteingangsöffnung zu der Luftausgangsöffnung in Serie geschaltet. Über eine Schalteinrichtung kann je nach aktuellen Erfordernissen entweder das Heizelement oder das Kühlelement aktiviert werden. Für einen optimalen Wirkungsgrad kann eine thermische Isolierung zwischen dem Heizelement und dem Kühlelement vorgesehen sein. Beispielsweise kann es sich bei dem Heizelement um einen Kaltleiter und bei dem Kühlelement um einen Verdampfer handeln, in dem ein Fluid verdampfen kann und hierdurch eine Wärme aus der Luft um den Wärmetauscher aufgenommen wird. Das Heizelement und das Kühlelement können in beliebiger Anordnung in Serie geschaltet sein. So erfüllt die hier vorgestellte Temperiervorrichtung vorteilhafterweise je nach Bedarf die Funktion einer Batteriekühlung oder die Funktion einer Batterieerwärmung.

Ferner kann zumindest ein in ein Abdichtelement fluiddicht eingegossenes Kabel zur Versorgung der Temperiervorrichtung mit elektrischem Strom vorgesehen sein. Das Abdichtelement kann über ein zweites Dichtelement mit dem Gehäusekörper und/oder dem Gehäusedeckel fluiddicht verbunden oder verbindbar sein. So kann vorteilhaft ein Eindringen von Wasser, Staub oder Schmutz zwischen dem Kabel und dem Gehäuse in das Innere der Temperiervorrichtung verhindert werden.

Gemäß einer Ausführungsform kann die Temperiervorrichtung eine Anschlussrohrleitung aufweisen, die durch Einstecken eines Verbindungsteils der Anschlussrohrleitung in die Lufteingangsöffnung des Gehäusekörpers an den Gehäusekörper angekoppelt ist oder ankoppelbar ist, wobei ein Außenumfang des Verbindungsteils einen größeren Durchmesser als ein Innenumfang der Lufteingangsöffnung aufweist, und wobei die Temperiervorrichtung eine weitere Anschlussrohrleitung aufweist, die durch Einstecken eines weiteren Verbindungsteils der weiteren Anschlussrohrleitung in die Luftausgangsöffnung des Gehäusekörpers an den Gehäusekörper angekoppelt ist oder ankoppelbar ist, wobei ein Außenumfang des weiteren Verbindungsteils einen größeren Durchmesser als ein Innenumfang der Luftausgangsöffnung aufweist. Durch den größeren Außenumfang des Verbindungsteils im Vergleich zu dem Innenumfang der Lufteingangsöffnung und der Luftausgangsöffnung ist eine negative Toleranz zwischen dem Verbindungsteil und der Lufteingangsöffnung sowie zwischen dem Verbindungsteil und der Luftausgangsöffnung gegeben. Diese Ausführungsform bietet den Vorteil, dass ohne Verwendung von zusätzlichen Werkzeugen die Anschlussrohrleitung und die weitere Anschlussrohrleitung ohne weiteres schnell, einfach und sicher fluiddicht mit dem Gehäusekörper verbunden werden können, z.B, in einem manuellen Verbindungsprozess. Auch können die Anschlussrohrleitungen an einem Rand des Verbindungsteils je zumindest eine flügelartige Ausformung mit einer Durchgangsöffnung für eine Schraubenverbindung mit einer weiteren Durchgangsöffnung der ersten Lufteingangsöffnung, der zweiten Lufteingangsöffnung und der Luftausgangsöffnung aufweisen. Eine derartige Verbindungsmöglichkeit kann in einem Fertigungsprozess der Anschlussrohrleitungen ohne weiteres vorgesehen sein. Eine Verbindung mit Schrauben bietet auch den Vorteil, dass sie in einem Reparatur-oder Wartungsfall leicht gelöst und nach der Reparatur ohne weiteres wieder hergestellt werden kann.

Gemäß einer weiteren Ausführungsform kann die Wärmetauschereinheit eine Öffnung aufweisen, über die die Wärmetauschereinheit mit der Luftausgangsöffnung des Gehäusekörpers kontaktiert ist oder kontaktierbar ist. Dabei kann zwischen der Öffnung und der Luftausgangsöffnung ein drittes Dichtelement eingefügt oder einfügbar sein. Vorteilhafterweise kann so die Luft direkt nach einer Erwärmung bzw. Abkühlung zu der Batterie zurückgeführt werden, ohne dass dafür eine Rohrleitung notwendig wäre, die die Temperatur der aufbereiteten Luft ungünstig beeinflussen würde. Das dritte Dichtelement kann ein unbeabsichtigtes Ausströmen der temperierten Luft an der Verbindungsstelle zwischen dem Gehäuse und der weiteren Anschlussrohrleitung vorteilhaft verhindern.

Ferner können das zweite Dichtelement, das Verbindungsteil und/oder das weitere Verbindungsteil und/oder das dritte Dichtelement ein Kautschukmaterial, insbesondere Ethylen-Propylen-Dien-Kautschuk, aufweisen. Dieses Material bietet den Vorteil, dass es neben einer hohen Elastizität eine hohe Wetter- und Feuchtigkeitsbeständigkeit sowie eine hohe thermische Beständigkeit aufweist. Somit ist es für einen Einsatz zur Abdichtung der hier vorgeschlagenen Temperiervorrichtung sehr gut geeignet, da es die Temperiervorrichtung vor Spritzwasser, Schmutz und Staub etc. aus der Fahrzeugumgebung schützen kann, ohne aufgrund der extremen Temperaturschwankungen innerhalb der Temperiervorrichtung vorzeitig zu altern und eventuell porös zu werden.

Die vorliegende Erfindung schafft ferner ein Herstellungsverfahren zum Herstellen einer Temperiervorrichtung für eine elektrochemische Energiespeichereinheit, wobei das Herstellungsverfahren die folgenden Schritte aufweist:
Bereitstellen eines wannenförmigen Gehäusekörpers mit zumindest einer Lufteingangsöffnung und einer Luftausgangsöffnung, wobei der Gehäusekörper in seinem Inneren ein Luftführungselement mit einer Wärmetauschereinheit aufweist, wobei die Lufteingangsöffnung und das Luftführungselement derart positioniert sind, dass Luft von der Lufteingangsöffnung in einen Innenbereich zwischen einer Innenwand des Gehäusekörpers und einer Außenwand des Luftführungselementes strömt, wobei das Luftführungselement ausgebildet ist, um über eine Luftaufnahmeöffnung die Luft von dem Innenbereich aufzunehmen und an die Wärmetauschereinheit zu leiten, wobei das Luftführungselement ferner ausgebildet ist, um die Luft nach Passieren der Wärmetauschereinheit durch die Luftausgangsöffnung aus dem Gehäusekörper herauszuleiten;
Bereitstellen eines Gehäusedeckels, der ausgebildet ist, um auf den Gehäusekörper aufgesetzt zu werden;
Bereitstellen eines Dichtelements, das ausgebildet ist, um zwischen den Gehäusekörper und den Gehäusedeckel eingefügt zu werden; und
Verbinden des Gehäusekörpers mit dem Gehäusedeckel, wobei das Dichtelement zwischen dem Gehäusekörper und dem Gehäusedeckel angeordnet ist, um die Temperiervorrichtung herzustellen.

Das Herstellungsverfahren kann beispielsweise auf einer Fertigungsstraße mit oder ohne manuelles Eingreifen durchgeführt werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine perspektivische Darstellung eines Kühlsystems zum Kühlen einer chemischen Energiespeichereinheit, gemäß einem Ausführungsbeispiel der vorliegenden Erfindung;
- Fig. 2: eine weitere perspektivische Darstellung des Kühlsystems aus Fig. 1, gemäß einem Ausführungsbeispiel der vorliegenden Erfindung;
- Fig. 3: eine weitere perspektivische Darstellung des Kühlsystems aus Fig. 1, gemäß einem Ausführungsbeispiel der vorliegenden Erfindung;
- Fig. 4: eine Schnittdarstellung einer Temperiervorrichtung gemäß einem Ausführungsbeispiel der vorliegenden Erfindung;
- Fig. 5: eine Prinzipdarstellung der Temperiervorrichtung aus Fig. 4;
- Fig. 6: eine Schnittdarstellung einer Temperiervorrichtung gemäß einem weiteren Ausführungsbeispiel der vorliegenden Erfindung;
- Fig. 7: eine Explosionsdarstellung einer Temperiervorrichtung gemäß einem Ausführungsbeispiel der vorliegenden Erfindung;
- Fig. 8: eine Draufsicht auf eine Temperiervorrichtung ohne Gehäusedeckel, gemäß einem Ausführungsbeispiel der vorliegenden Erfindung;
- Fig. 9: eine perspektivische Darstellung eines Gebläsegehäuses einer Temperiervorrichtung gemäß einem Ausführungsbeispiel der vorliegenden Erfindung;
- Fig. 10: eine Explosionsdarstellung eines Gebläsemotors einer Temperiervorrichtung gemäß einem Ausführungsbeispiel der vorliegenden Erfindung;
- Fig. 11: eine perspektivische Darstellung eines eingegossenen Kabelbaums zur Stromversorgung einer Temperiervorrichtung, gemäß einem Ausführungsbeispiel der vorliegenden Erfindung;
- Fig. 12: eine Explosionsdarstellung für eine Montage des eingegossenen Kabelbaums aus Fig. 11, gemäß einem Ausführungsbeispiel der vorliegenden Erfindung;
- Fig. 13: eine perspektivische Darstellung eines montierten eingegossenen Kabelbaums aus Fig. 11, gemäß einem Ausführungsbeispiel der vorliegenden Erfindung;
- Fig. 14: eine Explosionsdarstellung für eine Montage von Anschlussrohrleitungen, gemäß einem Ausführungsbeispiel der vorliegenden Erfindung;
- Fig. 15: eine Schnittdarstellung von montierten Anschlussrohrleitungen aus Fig. 14, gemäß einem Ausführungsbeispiel der vorliegenden Erfindung;
- Fig. 16: eine perspektivische Darstellung einer Dichtung für ein Kühlelement der Temperiervorrichtung, gemäß einem Ausführungsbeispiel der vorliegenden Erfindung;
- Fig. 17: eine weitere perspektivische Darstellung des Kühlelements mit Dichtung aus Fig. 16, gemäß einem Ausführungsbeispiel der vorliegenden Erfindung;
- Fig. 18: eine perspektivische Darstellung des Kühlelements mit Dichtung aus Fig. 16 einschließlich einer Steckverbindung, gemäß einem Ausführungsbeispiel der vorliegenden Erfindung;
- Fig. 19: ein Ausschnitt aus einer Konstruktionszeichnung für die Konstellation aus Fig. 18, gemäß einem Ausführungsbeispiel der vorliegenden Erfindung;
- Fig. 20: eine perspektivische Darstellung einer Befestigung einer Rohrleitung an dem Gehäusekörper, gemäß einem Ausführungsbeispiel der vorliegenden Erfindung;
- Fig. 21: eine perspektivische Darstellung einer Befestigung einer Rohrleitung an dem Gehäusekörper, gemäß einem weiteren Ausführungsbeispiel der vorliegenden Erfindung; und
- Fig. 22: ein Ablaufdiagramm eines Verfahrens gemäß einem Ausführungsbeispiel der vorliegenden Erfindung.

In der nachfolgenden Beschreibung der vorteilhaften Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Die nachfolgenden Figuren befassen sich mit Ausführungsbeispielen für ein HVAC-System zum Kühlen oder Wärmen eines Akkumulators eines Elektrofahrzeugs. Das hier gemäß dem erfinderischen Ansatz vorgestellte HVAC-System ist geeignet, um unterhalb des Fahrzeugs an einer Außenseite des Fahrzeugbodens implementiert zu werden, da es wasser- und staubdicht ausgeführt ist. Das HVAC-System kann sich z.B. aus Wärmetauschern, einem Teilsystemgebläse, einem Kabelbaum, Rohrleitungen sowie einem Schutzgehäuse zusammensetzen. Dabei kann das Schutzgehäuse in Form des Gehäuses der Temperiervorrichtung Teil des HVAC-Systems sein oder als zusätzliches Bauteil zum Schutz des Temperiervorrichtungsgehäuses implementiert sein. Die Abdichtung an kritischen Verbindungsstellen des Systems erfolgt durch ein spezielles Bauteil, das z.B. als ein geschäumter Kunststoff oder eine Silikondichtung ausgeführt sein kann. Beispielsweise ist das hier vorgestellte Batteriekühlsystem bzw. HVAC-System in vier Teilen lieferbar, die in einer Temperiervorrichtung, einem ersten Einlassrohr, einem zweiten Einlassrohr und einem Auslassrohr bestehen können. Die Teile sind geeignet, um in einer Fertigungsstraße zusammengefügt zu werden.

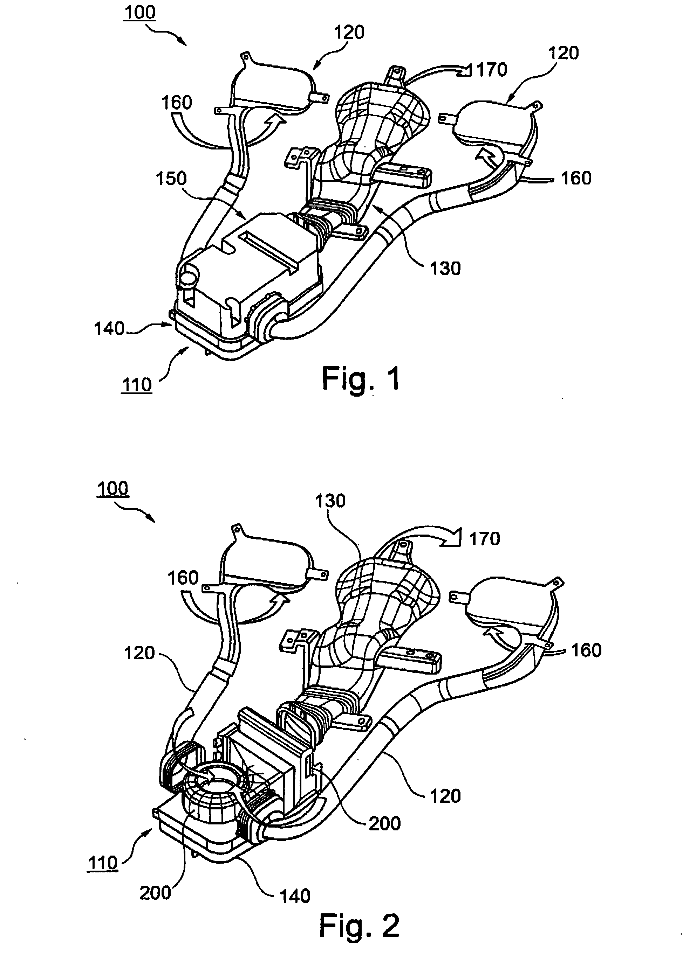

Fig. 1 zeigt eine perspektivische Darstellung eines HVAC-Konzepts 100 zum Kühlen einer chemischen Energiespeichereinheit, gemäß einem Ausführungsbeispiel der vorliegenden Erfindung. Gezeigt sind eine Temperiervorrichtung 110, eine erste und zweite Anschlussrohrleitung 120 und eine weitere Anschlussrohrleitung 130. Die Temperiervorrichtung 110 umfasst ein unteres Gehäuse beziehungsweise einen Gehäusekörper 140 und ein oberes Gehäuse beziehungsweise einen Gehäusedeckel 150. Zwei Pfeile 160 zeigen eine Strömungsrichtung von Luft in die erste und zweite Lufteinlassleftung bzw. Anschlussrohrleitung 120 durch entsprechende Öffnungen in der ersten und zweiten Lufteinlassleitung 120 an. Ein Pfeil 170 zeigt eine Strömungsrichtung von Luft aus der weiteren Anschlussrohrleitung bzw. der Luftauslassleitung 130 durch eine entsprechende Öffnung in der Luftauslassleitung 130 an. In der Darstellung in Fig. 1 dienen die Lufteinlassleitungen 120 als Auslass für Luft von der Batterie, und die Luftauslassleitung 130 dient als Einlass für Luft von der Batterie. Das in Fig. 1 gezeigte Ausführungsbeispiel des Kühlsystems 100 weist eine flache Bauweise auf, um an eine Außenseite eines Fahrzeugbodens montiert werden zu können.

Fig. 2 zeigt das Kühlsystem 100 aus Fig. 1 in einem Heizmodus zum Erwärmen von Luft. Hier ist die Temperiervorrichtung 110 ohne Gehäusedeckel und Seitenwände des Gehäusekörpers 140 gezeigt, so dass ein Luftführungselement 200 sowie eine Wärmetauschereinheit 210 sichtbar sind, die in einem Innenraum des Gehäusekörpers 140 angeordnet sind. Hier symbolisieren die Pfeile 160 einen Einlass kalter Luft von der Batterie in die Anschlussrohrleitungen 120, und der Pfeil 170 symbolisiert einen Auslass warmer Luft aus der weiteren Anschlussrohrleitung 130. Durch die Anschlussrohrleitungen 120 gelangt die kalte Luft in das Luftführungselement 200, das die kalte Luft auf die Wärmetauschereinheit 210 richtet, die sich im Heizmodus befindet. So wird dort die kalte Luft erwärmt und durch die Luftauslassleitung 130 zurück zur Batterie geleitet, um diese zu erwärmen. In dem Heizmodus der Temperiervorrichtung 110 ist beispielsweise ein von der Wärmetauschereinheit 210 umfasster Kaltleiter aktiviert und ein von der Wärmetauschereinheit 210 umfasster Verdampfer deaktiviert. Eine Temperaturregelung der die Wärmetauschereinheit 210 durchströmenden Luft ist nur möglich, wenn entweder der Kaltleiter oder der Verdampfer aktiviert ist.

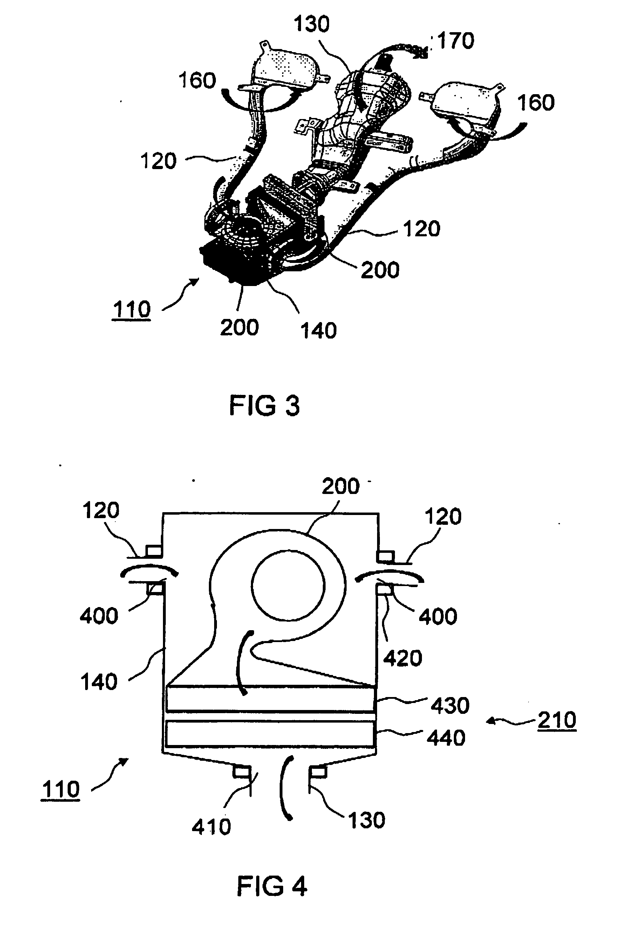

Fig. 3 zeigt das Kühlsystem 100 aus Fig. 1 in einem Kühlmodus zum Abkühlen von Luft. Wiederum ist die Temperiervorrichtung 110 ohne Gehäusedeckel und Seitenwände des Gehäusekörpers 140 gezeigt, so dass das Luftführungselement 200 und die Wärmetauschereinheit 210 sichtbar sind, die in dem Innenraum des Gehäusekörpers 140 angeordnet sind. In der Darstellung in Fig. 3 symbolisieren die Pfeile 160 einen Einlass warmer Luft in die Anschlussrohrleitungen 120, und der Pfeil 170 symbolisiert einen Auslass kalter Luft aus der weiteren Anschlussrohrleitung 130. Durch die Anschlussrohrleitungen 120 gelangt die warme Luft in das Luftführungselement 200, das die warme Luft auf die Wärmetauschereinheit 210 richtet, die sich im Kühlmodus befindet. So wird dort die warme Luft abgekühlt und durch die Luftauslassleitung 130 zurück zur Batterie geleitet, um diese zu kühlen. In dem Kühlmodus der Temperiervorrichtung 110 ist beispielsweise der von der Wärmetauschereinheit 210 umfasste Verdampfer aktiviert und der von der Wärmetauschereinheit 210 umfasste Kaltleiter deaktiviert. Eine Temperaturregelung der die Wärmetauschereinheit 210 durchströmenden Luft ist nur möglich, wenn entweder der Kaltleiter oder der Verdampfer aktiviert ist.

Fig. 4 zeigt eine Prinzipdarstellung der Temperiervorrichtung 110 gemäß einem Ausführungsbeispiel der vorliegenden Erfindung. Die Temperiervorrichtung 110 ist hier im Längsschnitt gezeigt. Das Schutzgehäuse bzw. der Gehäusekörper 140 umfasst das Luftführungselement 200. Ferner weist der Gehäusekörper 140 in gegenüberliegenden Seitenwänden zwei Lufteingangsöffnungen 400 zum Aufnehmen von Luft in einen Innenbereich zwischen einer Innenwand des Gehäusekörpers 140 und einer Außenwand des Luftführungselementes 200 auf. Des Weiteren weist der Gehäusekörper 140 in einer weiteren Seitenwand Luftausgangsöffnungen 410 auf. Die Lufteingangsöffnungen 400 sind mit je einer Anschlussrohrleitung 120 verbunden, und die Luftausgangsöffnung 410 ist mit der weiteren Anschlussrohrleitung 130 verbunden. An einem Übergang zwischen den Anschlussrohrleitungen 120 und den Lufteingangsöffnungen 400 sowie zwischen der Anschlussrohrleitung unter 130 und der Luftausgangsöffnung 410 ist jeweils eine Dichtung 420 vorgesehen, von denen der Übersichtlichkeit halber lediglich eine mit einem Bezugszeichen versehen ist. Die Dichtungen 420 sind ausgebildet, um ein Eindringen von Wasser und Schmutzpartikeln in den Innenraum der Temperiervorrichtung 110 zu verhindern.

Die Darstellung des Ausführungsbeispiels in Fig. 4 zeigt, dass die in den Innenraum eingeströmte Luft in ein Gebläse des Luftführungselements 200 geleitet wird, das die Luft anschließend auf die dem Luftführungselement 200 nachgeschaltete Wärmetauschereinheit 210 richtet. Anschießend durchströmt die Luft die Wärmetauschereinheit 210 und wird je nach aktivierter Funktion der Wärmetauschereinheit 210 erwärmt oder gekühlt. Schließlich verlässt die so temperierte Luft die Temperiervorrichtung 110 durch die Luftausgangsöffnung 410 und wird von der weiteren Anschlussrohrleitung 130 zurück zur Batterie geleitet. In der Darstellung in Fig. 4 setzt sich die Wärmetauschereinheit 210 aus einem ersten Wärmetauscher 430 und einem zweiten Wärmetauscher 440 zusammen, die in Serie geschaltet sind. Sowohl der erste Wärmetauscher 430 als auch der zweite Wärmetauscher 440 können wahlweise als Heizer oder Kühler genutzt werden. Anders als in Fig. 4 dargestellt, kann die Temperiervorrichtung 110 auch ohne die Wärmetauschereinheit 210 ausgeführt sein.

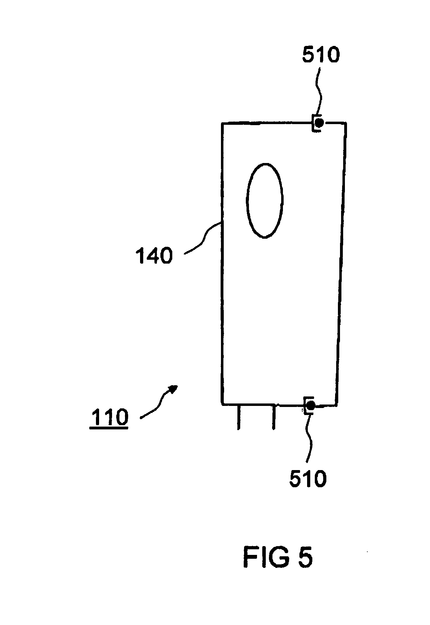

Fig. 5 zeigt in einer Prinzipdarstellung eine Außenansicht der Temperiervorrichtung 110 aus Fig. 4. Gezeigt sind der Gehäusekörper 140 und der Gehäusedeckel 150. Ferner ist eine spezielle Dichtung 510 gezeigt, die zwischen dem Gehäusekörper 140 und dem Gehäusedeckel 150 eingebracht wird, um ein Eindringen von Wasser und Schmutz in die Temperiervorrichtung 110 zu verhindern. Der Gehäusekörper 140 und der Gehäusedeckel 150 bilden zusammen ein Schutzgehäuse für die in der Temperiervorrichtung angeordneten Elemente, das stabil genug ist, um eventuellen Stößen auf die Temperiervorrichtung, z.B. durch Steinschlag währen der Fahrt oder Aufsetzen auf eine Bordsteinkante o.ä., standzuhalten.

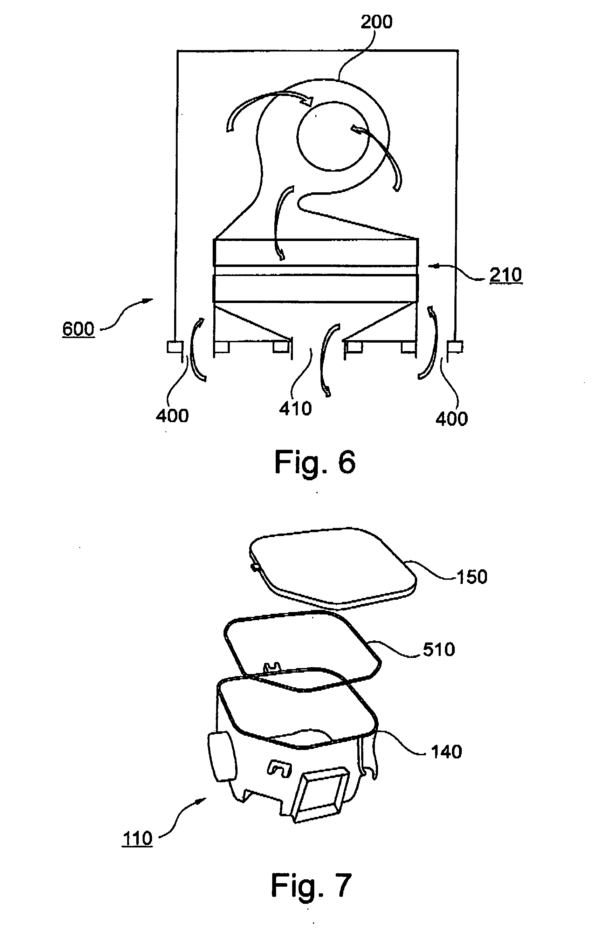

Fig. 6 zeigt eine Schnittdarstellung einer Temperiervorrichtung 600 gemäß einem weiteren Ausführungsbeispiel der vorliegenden Erfindung. Die Temperiervorrichtung 600 ist im Wesentlichen analog zu der Temperiervorrichtung 110 aufgebaut mit dem Unterschied, dass die Lufteingangsöffnungen 400 in der gleichen Seitenwand wie die Luftausgangsöffnung 410 angeordnet sind. So sind bei dem in Fig. 6 gezeigten Ausführungsbeispiel der Temperiervorrichtung 600 das Luftführungselement 200 und die Wärmetauschereinheit 210 mit geringerer Breite ausgeführt, damit die durch die Lufteingangsöffnungen 400 eingelassene Luft an diesen vorbei ins Innere der Temperiervorrichtung 600 hineinströmen kann. Auch die Temperiervorrichtung 600 kann, anders als in Fig. 6 dargestellt, auch ohne die Wärmetauschereinheit 210 ausgeführt sein.

Fig. 7 zeigt eine Explosionsdarstellung der Temperiervorrichtung 110 gemäß einem Ausführungsbeispiel der vorliegenden Erfindung. Gezeigt sind der Gehäusekörper 140, die Dichtung 510 sowie der Gehäusedeckel 150, wie sie für eine Montage der Temperiervorrichtung 110 angeordnet sind. Die Dichtung 510 wird während des Montageprozesses eingesetzt, um einen Lecken zwischen dem oberen Gehäuseteil 150 und unteren Gehäuseteil 140 zu verhindern. Bei dem in Fig. 7 gezeigten Ausführungsbeispiel der Temperiervorrichtung 100 wird der obere Gehäuseteil 150 über Schrauben mit dem unteren Gehäuseteil 140 verbunden.

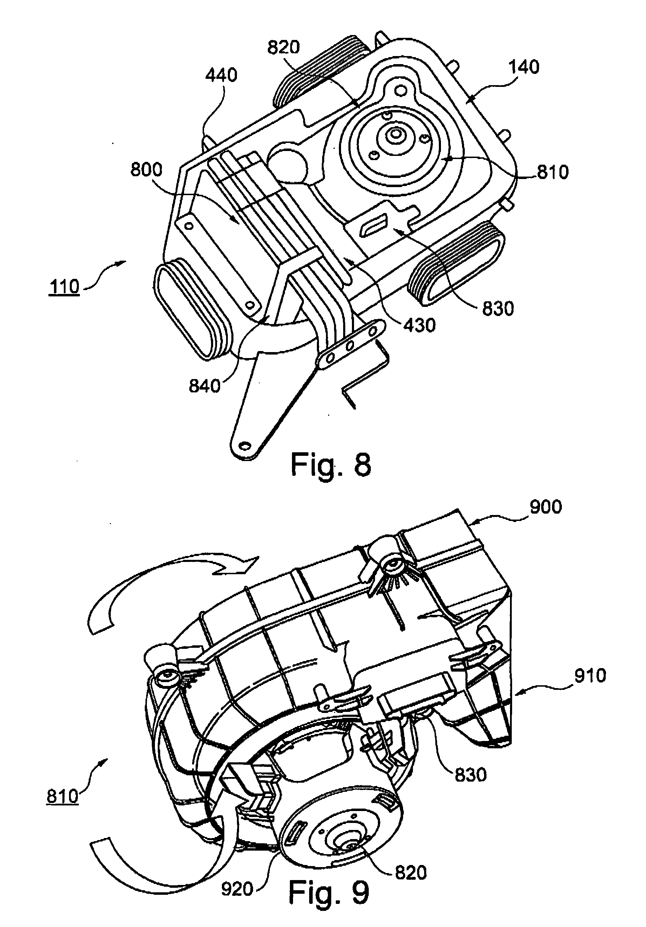

Fig. 8 zeigt eine Draufsicht auf die Temperiervorrichtung 110 des HVAC-Systems gemäß einem Ausführungsbeispiel der vorliegenden Erfindung, wobei der Gehäusedeckel der Temperiervorrichtung 110 entfernt ist. Gezeigt sind das Schutzgehäuse bzw. der Gehäusekörper 140, das Kühlelement bzw. der Verdampfer 440, ein Verdampfersensor 800, ein Gebläsegehäuse 810, ein Motor 820 mit Käfig, ein Regler 830, das Heizelement bzw. der Kaltleiter 430 sowie ein Flansch 840. Gemäß der Darstellung in Fig. 8 wird das Gebläsegehäuse 810 mithilfe von Schrauben montiert und in dem Gehäusekörper 140 befestigt. Wie hier deutlich zu sehen ist, wird weder für einen Einlass von Luft in den Gehäusekörper 140 noch für einen Einlass von Luft in das Gebläsegehäuse 810 eine Leitung benötigt, wodurch ein Luftfluss verbessert und störende Geräusche vermieden werden können.

Fig. 9 zeigt eine perspektivische Darstellung des Gebläsegehäuses 810 aus Fig. 8. Das Gebläsegehäuse 810 setzt sich aus einem oberen Gebläsegehäuse 900 und einem unteren Gebläsegehäuse 910 zusammen. Das Gebläsegehäuse 810 umfasst den Motor 820, der von einem Gebläsemotorkäfig 920 gehaltert wird. Zudem ist der Regler 830 gezeigt. Pfeile zeigen eine Strömungsrichtung eines Lufteinlasses in das Gebläsegehäuse 810 an. Der Lufteinlass kann in einem Doppelstrom erfolgen, um so den Luftfluss zu begünstigen und eine Geräuschentwicklung zu vermindern.

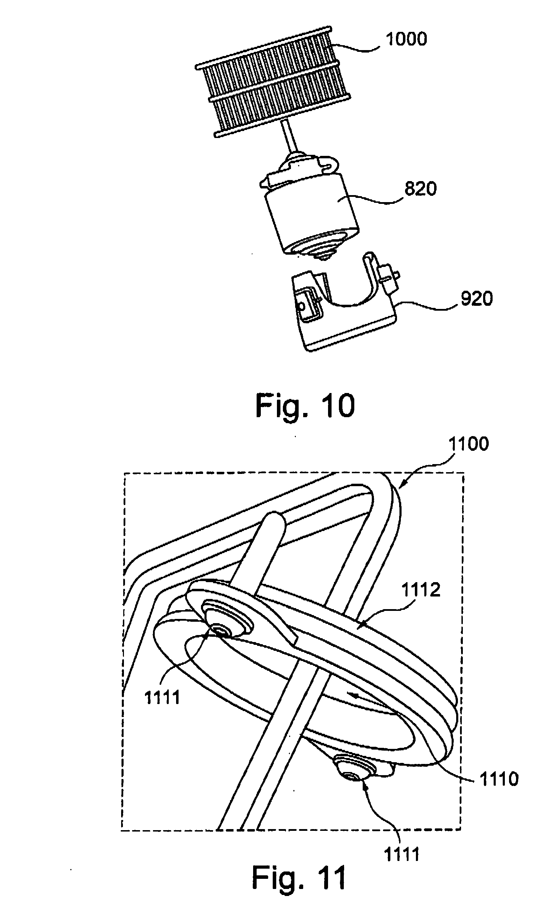

Fig. 10 zeigt in einer Explosionsdarstellung den Gebläsemotor 820 sowie den Gebläsemotorkäfig 920 zur Halterung des Gebläsemotors 820 aus Fig. 9. Ferner ist ein Rad 1000 gezeigt, in das der Gebläsemotor 820 samt Halterung 920 eingesetzt wird. Die Motorhalterung 920 wird für einen Wuchten des Motors 820 benötigt. Der Motorkäfig 920 weist Koppelelemente auf, mit denen der Motorkäfig 920 an dem unteren Gebläsegehäuse 910 befestigt werden kann.

Fig. 11 zeigt eine perspektivische Darstellung für eine Abdichtung einer Verbindung eines Kabelbaums zur Stromversorgung der Temperiervorrichtung mit dem Gehäuse der Temperiervorrichtung, gemäß einem Ausführungsbeispiel der vorliegenden Erfindung. Gezeigt ist ein Kabelbaum 1100, der mit einem Übergussteil 1110 einstückig verbunden ist. In der in Fig. 11 gezeigten Darstellung weist das Übergussteil 1110 die Form einer runden Platte mit zwei flügelartigen Ausbuchtungen für eine Schraubverbindung mit dem Gehäuse der Temperiervorrichtung durch Schrauben 1111 auf. Der eingegossene Kabelbaum 1100 kann beispielsweise in einem Gießverfahren hergestellt werden, wobei als Übergussmaterial z.B. ein wärme- und feuchtigkeitsresistenter Kunststoff verwendet werden kann. Zur fluiddichten Abdichtung gegen einen Außenraum der Temperiervorrichtung wird zwischen dem eingegossenen Kabelbaum 1100 und dem Gehäuse der Temperiervorrichtung ein O-Ring 1111 eingefügt, der ebenfalls aus einem wärme- und feuchtigkeitsresistenten Kunststoff hergestellt sein kann. Das eingegossene Kabel 1100 wird verwendet, um zu gewährleisten, dass kein Wasser zwischen dem Kabel 1100 und dem Gehäuse der Temperiervorrichtung eindringen kann.

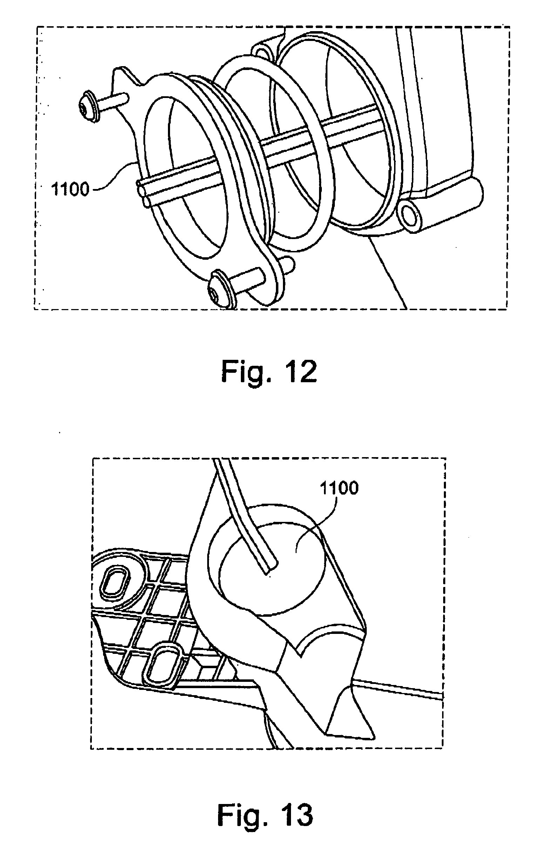

Fig. 12 zeigt eine Explosionsdarstellung für einen Zusammenbau des eingegossenen Kabelbaums 1100 aus Fig. 11 mit dem Gehäuse der Temperiervorrichtung.

Fig. 13 zeigt in einer perspektivischen Darstellung den fertig in das Gehäuse der Temperiervorrichtung montierten eingegossenen Kabelbaum 1100 aus Fig. 11.

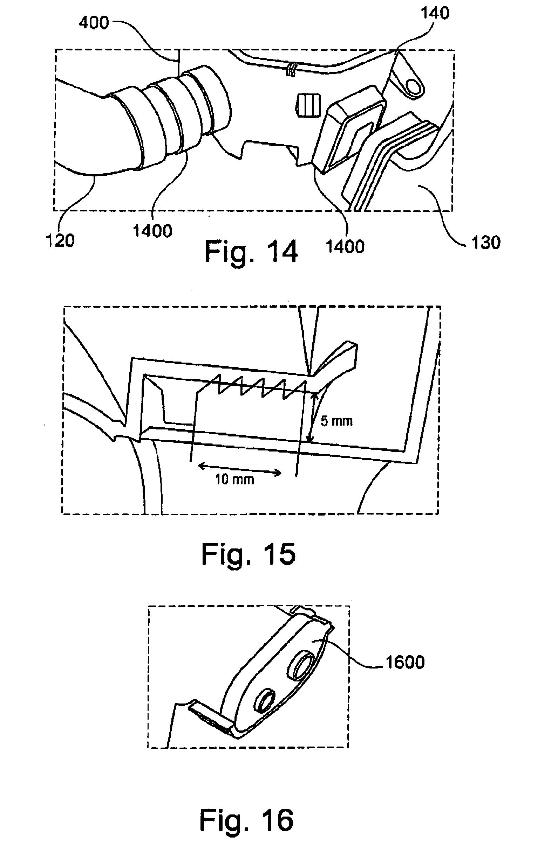

Fig. 14 zeigt in einer Explosionsdarstellung eine Möglichkeit der Abdichtung von Rohrleitungen einer erfindungsgemäßen Temperiervorrichtung, gemäß einem Ausführungsbeispiel der vorliegenden Erfindung. Gezeigt sind der Gehäusekörper 140 sowie eine Anschlussrohrleitung 120 und die weitere Anschlussrohrleitung 130. Die Anschlussrohrleitung 120 wird über ein erstes Verbindungsteil 1400 fluiddicht mit einer Lufteingangsöffnung 400 des Gehäusekörpers 140 verbunden, und die weitere Anschlussrohrleitung 130 wird über ein zweites Verbindungsteil 1400 fluiddicht mit der Luftausgangsöffnung 410 des Gehäusekörpers 140 verbunden. Wie aus der Darstellung in Fig. 14 ersichtlich ist, können die Verbindungsteile 1400 an einen Querschnitt der Anschlussrohrleitungen 120, 130 angepasste Formen aufweisen. Die Verbindungsteile 1400 können einen Außenumfang aufweisen, der größer ist als ein Innenumfang der Lufteingangsöffnung 400 und der Luftausgangsöffnung 410. So kann beim Zusammenbau der Anschlussrohrleitung 120 und der weiteren Anschlussrohrleitung 130 mit dem Gehäusekörper 140 eine negative Toleranz realisiert werden, indem die Verbindungsteile 1400 in die Lufteingangsöffnung 400 sowie die Luftausgangsöffnung 410 eingesteckt werden. Als Material für die Verbindungsteile 1400 kann beispielsweise Ethylen-Propylen-Dien-Kautschuk (EPDM) verwendet werden. Die Montage kann in einem herkömmlichen manuellen Prozess erfolgen.

Fig. 15 zeigt in einer Schnittdarstellung eine abgeschlossene Montage gemäß den Erläuterungen anhand von Fig. 14. Es ist zu erkennen, wie das Prinzip der negativen Toleranz zur Verwirklichung einer fluiddichten Verbindung von Gehäuse und Anschlussrohrleitungen umgesetzt wurde.

Fig. 16 zeigt eine perspektivische Darstellung einer Dichtung 1600 für ein Kühlelement bzw. einen Verdampfer des Wärmetauschers der Temperiervorrichtung, gemäß einem Ausführungsbeispiel der vorliegenden Erfindung. Die Dichtung 1600 kann aus EPDM hergestellt sein und gewährleistet eine hohe Dichtigkeit gegenüber dem Gehäuse und den Rohrleitungen. In Fig. 16 ist nicht dargestellt, dass die Dichtung 1600 ein Expansionsventil umfassen kann. Form und Material der Dichtung 1600 sind für eine Serienproduktion geeignet. Bei einer Herstellung und Verwendung der Dichtung 1600 wird darauf geachtet, dass eine akustische Transparenz der Dichtung stets gewährleistet ist.

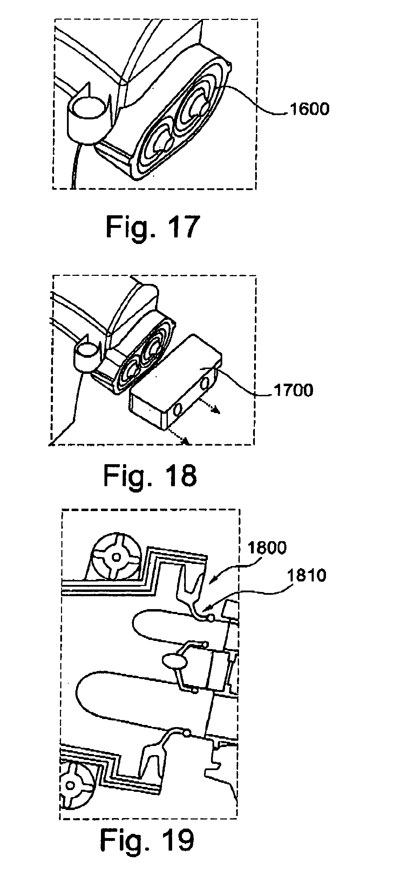

Fig. 17 zeigt in einer weiteren perspektivischen Darstellung das Kühlelement mit der Dichtung 1600 aus Fig. 16 im Verbau mit dem Gehäuse der erfindungsgemäßen Temperiervorrichtung.

Fig. 18 zeigt in einer weiteren perspektivischen Darstellung den Verbau aus Fig. 17 einschließlich einer Steckverbindung, gemäß einem Ausführungsbeispiel der vorliegenden Erfindung.

Fig. 19 zeigt einen Ausschnitt aus einer Konstruktionszeichnung für die Konstellation aus Fig. 18, gemäß einem Ausführungsbeispiel der vorliegenden Erfindung. Das Montageprinzip der negativen Toleranz ist durch zwei Pfeile verdeutlicht. So zeigt ein Pfeil 1800 eine negative Toleranz zwischen Gehäuse und Dichtung an, und ein Pfeil 1810 zeigt eine negative Toleranz zwischen Rohrleitung und Dichtung an.

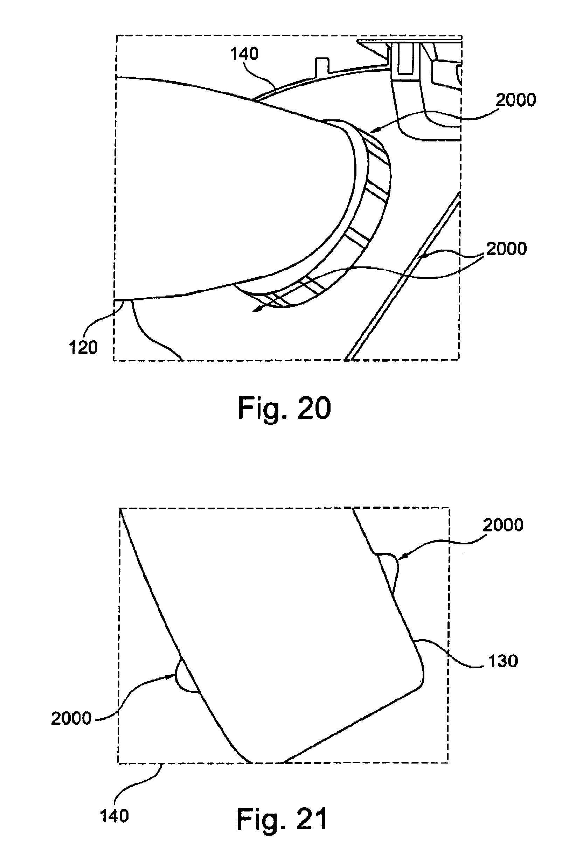

Fig. 20 zeigt in einer perspektivischen Darstellung ein Ausführungsbeispiel für eine Befestigungsmöglichkeit einer Anschlussrohrleitung 120 an dem Gehäusekörper 140 der Temperiervorrichtung mithilfe von Schrauben, gemäß einem Ausführungsbeispiel der vorliegenden Erfindung. Pfeile kennzeichnen eine Mehrzahl von Materialausbuchtungen 2000 der Anschlussrohrleitung 120, die Durchgangsöffnungen zum Einbringen von Schrauben aufweisen, um die

Anschlussrohrleitung 120 so mit den Schrauben an den Gehäusekörper 140 zu fixieren, dass optimale Dichtigkeit und Qualität gegeben sind. Es wird kein spezielles Werkzeug zur Fixierung der Anschlussrohrleitung 120 mithilfe von Schrauben benötigt.

Fig. 21 zeigt in einer weiteren perspektivischen Darstellung das Befestigungsprinzip mithilfe von Schrauben durch Materialausbuchtungen 2000 gemäß Fig. 20 für eine Befestigung der weiteren Anschlussrohrleitung 130 an dem Gehäusekörper 140.

Die beschriebenen Ausführungsbeispiele sind nur beispielhaft gewählt und können miteinander kombiniert werden.

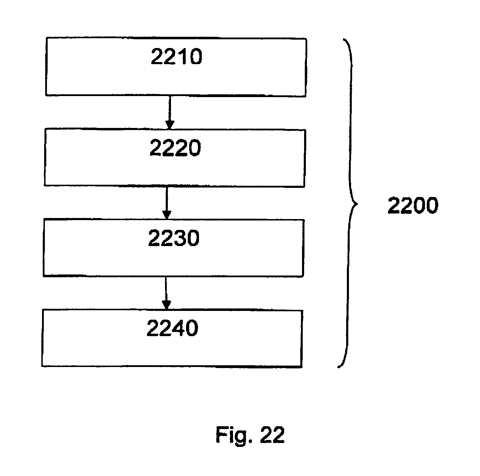

Fig. 22 zeigt ein Ablaufdiagramm eines Herstellungsverfahrens zum Herstellen einer Luftführungsvorrichtung für eine elektrochemische Energiespeichereinheit gemäß einem Ausführungsbeispiel der vorliegenden Erfindung. Das Verfahren umfasst einen Schritt des Bereitstellens 2210 eines wannenförmigen Gehäusekörpers mit zumindest einer Lufteingangsöffnung und einer Luftausgangsöffnung, wobei der Gehäusekörper in seinem Inneren ein mit einem Boden des Gehäusekörpers verbundenes Luftführungselement aufweist, wobei die Lufteingangsöffnung und das Luftführungselement derart positioniert sind, dass Luft von der Lufteingangsöffnung in einen Innenbereich zwischen einer Innenwand des Gehäusekörpers und einer Außenwand des Luftführungselementes strömt, wobei das Luftführungselement ausgebildet ist, um über eine Luftaufnahmeöffnung die Luft von dem Innenbereich aufzunehmen und um die Luft durch die Luftausgangsöffnung aus dem Gehäusekörper herauszuleiten. Ferner umfasst das Verfarhen 2200 einen Schritt des Bereitstellen 2220 eines Gehäusedeckels, der ausgebildet ist, um auf den Gehäusekörper aufgesetzt zu werden. Auch umfasst das Verfahren einen Schritt des Bereitstellen 2230 eines Dichtelements, das ausgebildet ist, um zwischen den Gehäusekörper und den Gehäusedeckel eingefügt zu werden. Schließlich umfasst das Verfahren einen Schritt des Verbindens 2240 des Gehäusekörpers mit dem Gehäusedeckel, wobei das Dichtelement zwischen dem Gehäusekörper und dem Gehäusedeckel angeordnet ist, um die Luftführungsvorrichtung herzustellen.

## Patentansprüche

1. Luftführungsvorrichtung (110; 600) für eine elektrochemische Energiespelchereinheit, wobei die Luftführungsvorrichtung die folgenden Merkmale aufweist:
einen wannenförmigen Gehäusekörper (140) mit zumindest einer Lufteingangsöffnung (400) und einer Luftausgangsöffnung (410), wobei der Gehäusekörper in seinem Inneren ein mit einem Boden des Gehäusekörpers verbundenes Luftführungselement (200) aufweist, wobei die Lufteingangsöffnung und das Luftführungselement derart positioniert sind, dass Luft von der Lufteingangsöffnung in einen Innenbereich zwischen einer Innenwand des Gehäusekörpers und einer Außenwand des Luftführungselementes strömt, wobei das Luftführungselement ausgebildet ist, um über eine Luftaufnahmeöffnung die Luft von dem Innenbereich aufzunehmen und um die Luft durch die Luftausgangsöffnung aus dem Gehäusekörper herauszuleiten; einen Gehäusedeckel (150), der ausgebildet ist, um auf den Gehäusekörper aufgesetzt zu werden; und **gekennzeichnet ist durch**
ein Dichtelement (510), das ausgebildet ist, um zwischen den Gehäusekörper und den Gehäusedeckel eingefügt zu werden, oder das zwischen den Gehäusekörper und den Gehäusedeckel eingefügt ist, um die Luftführungsvorrichtung zu bilden, wobei
das Luftführungselement eine Wärmetauschereinheit (210) aufweist, wobei das Luftführungselement ausgebildet ist, um die Luft an die Wärmetauscherreinheit zu leiten, wobei die Wärmetauschereinheit (210) ein Heizelement (430, 440) und ein von dem Heizelement getrenntes Kühlelement (430, 440) aufweist, wobei das Heizelement und das Kühlelement in Bezug auf einen Luftstrom von der Lufteingangsöffnung (400) zu der Luftausgangsöffnung (410) in Serie geschaltet sind.

2. Luftführungsvorrichtung (110; 600) gemäß Anspruch 1, **dadurch gekennzeichnet, dass** das Dichtelement (510) ein Kautschukmaterial, insbesondere Ethylen-Propylen-Dien-Kautschuk, aufweist.

3. Luftführungsvorrichtung (110; 600) gemäß einem der vorangegangenen Ansprüche, **dadurch gekennzeichnet, dass** die Lufteingangsöffnung (400) und die Luftausgangsöffnung (410) in unterschiedlichen Seitenwänden des Gehäusekörpers (140) angeordnet sind.

4. Luftführungsvorrichtung (110; 600) gemäß einem der vorangegangenen Ansprüche, **dadurch gekennzeichnet, dass** die Luftführungsvorrichtung eine weitere Lufteingangsöffnung (400) aufweiset, die in einer anderen Seitenwand des Gehäusekörpers (140) angeordnet ist als die Lufteingangsöffnung (400) und die Luftausgangsöffnung (410).

5. Luftführungsvorrichtung (110; 600) gemäß einem der Ansprüche 1 oder 2, **dadurch gekennzeichnet, dass** die Lufteingangsöffnung (400) und die Luftausgangsöffnung (410) in einer selben Seitenwand des Gehäusekörpers (140) angeordnet sind.

6. Luftführungsvorrichtung (110; 600) gemäß einem der Ansprüche 1, 2, **dadurch gekennzeichnet, dass** die Luftführungsvorrichtung eine weitere Lufteingangsöffnung (400) aufweist, wobei die Lufteingangsöffnung (400), die weitere Lufteingangsöffnung und die Luftausgangsöffnung (410) in einer selben Seitenwand des Gehäusekörpers (140) angeordnet sind.

7. Luftführungsvorrichtung (110; 600) gemäß einem der vorangegangenen Ansprüche 4 oder 6, **dadurch gekennzeichnet, dass** das Heizelement und das Kühlelement in Bezug auf einen Luftstrom von der Lufteingangsöffnung (400) und/oder der weiteren Lufteingangsöffnung (400) zu der Luftausgangsöffnung (410) in Serie geschaltet sind.

8. Luftführungsvorrichtung (110; 600) gemäß einem der vorangegangenen Ansprüche, **dadurch gekennzeichnet, dass** zumindest ein in ein Abdichtelement (1110) fluiddicht eingegossenes Kabel (1100) zur Versorgung der Luftführungsvorrichtung mit elektrischem Strom vorgesehen ist, wobei das Abdichtelement über ein zweites Dichtelement (1112) mit dem Gehäusekörper (140) und/oder dem Gehäusedeckel (150) fluiddicht verbunden ist oder verbindbar ist.

9. Luftführungsvorrichtung (110; 600) gemäß Anspruch 8, **dadurch gekennzeichnet, dass** das zweite Dichtelement (1112) ein Kautschukmaterial, insbesondere Ethylen-Propylen-Dien-Kautschuk, aufweist.

10. Luftführungsvorrichtung (110; 600) gemäß einem der vorangegangenen Ansprüche, **dadurch gekennzeichnet, dass** die Luftführungsvorrichtung eine Anschlussrohrleitung (120) aufweist, die durch Einstecken eines Verbindungsteils (1400) der Anschlussrohrleitung in die Lufteingangsöffnung (400) des Gehäusekörpers (140) an den Gehäusekörper angekoppelt ist oder ankoppelbar ist, wobei ein Außenumfang des Verbindungsteils einen größeren Durchmesser als ein Innenumfang der Lufteingangsöffnung aufweist, und wobei die Luftführungsvorrichtung eine weitere Anschlussrohrleitung (130) aufweist, die durch Einstecken eines weiteren Verbindungsteils (1400) der weiteren Anschlussrohrleitung in die Luftausgangsöffnung (410) des Gehäusekörpers an den Gehäusekörper angekoppelt ist oder ankoppelbar ist, wobei ein Außenumfang des weiteren Verbindungsteils einen größeren Durchmesser als ein Innenumfang der Luftausgangsöffnung aufweist.

11. Luftführungsvorrichtung (110; 600) gemäß Anspruch 10, **dadurch gekennzeichnet, dass** das Verbindungstell (1400) und/oder das weitere Verbindungsteil (1400) ein Kautschukmaterial, insbesondere Ethylen-Propylen-Dien-Kautschuk, aufweisen.

12. Luftführungsvorrichtung (110; 600) gemäß einem der vorangegangenen Ansprüche, **dadurch gekennzeichnet, dass** die Wärmetauschereinheit (210) eine Öffnung aufweist, über die die Wärmetauschereinheit mit der Luftausgangsöffnung (410) des Gehäusekörpers (140) kontaktiert ist oder kontaktierbar ist, wobei zwischen der Öffnung und der Luftausgangsöffnung ein drittes Dichtelement (1600) eingefügt ist oder einfügbar ist.

13. Luftführungsvorrichtung (110; 600) gemäß Anspruch 12, **dadurch gekennzeichnet, dass** das dritte Dichtelement (1600) ein Kautschukmaterial, insbesondere Ethylen-Propylen-Dien-Kautschuk, aufweist.

14. Herstellungsverfahren zum Herstellen einer Luftführungsvorrichtung nach zumindest einem der vorhergehenden Ansprüche, (110; 600) für eine elektrochemische Energiespeichereinheit, wobei das Herstellungsverfahren die folgenden Schritte aufweist:
Bereitstellen eines wannenförmigen Gehäusekörpers (140) mit zumindest einer Lufteingangsöffnung (400) und einer Luftausgangsöffnung (410), wobei der Gehäusekörper in seinem Inneren ein mit einem Boden des Gehäusekörpers verbundenes Luftführungselement (200) aufweist, wobei die Lufteingangsöffnung und das Luftführungselement derart positioniert sind,
dass Luft von der Lufteingangsöffnung in einen Innenbereich zwischen einer Innenwand des Gehäusekörpers und einer Außenwand des Luftführungselementes strömt, wobei das Luftführungselement ausgebildet ist, um über eine Luftaufnahmeöffnung die Luft von dem Innenbereich aufzunehmen und um die Luft durch die Luftausgangsöffnung aus dem Gehäusekörper herauszuleiten;
Bereitstellen eines Gehäusedeckels (150), der ausgebildet ist, um auf den Gehäusekörper aufgesetzt zu werden;
Bereitstellen eines Dichtelements (510), das ausgebildet ist, um zwischen den Gehäusekörper und den Gehäusedeckel eingefügt zu werden; und Verbinden des Gehäusekörpers mit dem Gehäusedeckel, wobei das Dichtelement zwischen dem Gehäusekörper und dem Gehäusedeckel angeordnet ist, um die Luftführungsvorrichtung herzustellen.

## Claims

1. An air guidance device (110; 600) for an electrochemical energy storage unit, wherein the air guidance device comprises the following features:
a tub-shaped housing body (140) comprising at least one air inlet opening (400) and an air outlet opening (410), wherein the housing body in its interior comprises an air guidance element (200) connected to a base of the housing body, wherein the air inlet opening and the air guidance element are positioned in such a way that air flows from the air inlet opening into an inner region between an inner wall of the housing body and an outer wall of the air guidance element, wherein the air guidance element is designed to receive the air from the inner region via an air-receiving opening and to guide the air out from the housing body through the air outlet opening;
a housing cover (150), which is designed to be fitted onto the housing body; and is **characterised by** a seal element (510), which is designed to be inserted between the housing body and the housing cover or
which is inserted between the housing body and the housing cover so as to form the air guidance device,
wherein
the air guidance element has a heat exchanger unit (210), wherein the air guidance element is designed to convey the air to the heat exchanger unit, wherein
the heat exchanger unit (210) has a heating element (430, 440) and a cooling element (430, 440) separate from the heating element, wherein the heating element and the cooling element are connected in series with respect to an airflow from the air inlet opening (400) to the air outlet opening (410).

2. The air guidance device (110; 600) according to claim 1, **characterised in that** the seal element (510) comprises a rubber material, in particular ethylene propylene diene rubber.

3. The air guidance device (110; 600) according to one of the preceding claims, **characterised in that** the air inlet opening (400) and the air outlet opening (410) are arranged in different side walls of the housing body (140).

4. The air guidance device (110; 600) according to one of the preceding claims, **characterised in that** the air guidance device comprises a further air inlet opening (400), which is arranged in a different side wall of the housing body (140) compared to the air inlet opening (400) and the air outlet opening (410).

5. The air guidance device (110; 600) according to one of claims 1 or 2, **characterised in that** the air inlet opening (400) and the air outlet opening (410) are arranged in a same side wall of the housing body (140).

6. The air guidance device (110; 600) according to one of claims 1 or 2, **characterised in that** the air guidance device comprises a further air inlet opening (400), wherein the air inlet opening (400), the further air inlet opening and the air outlet opening (410) are arranged in a same side wall of the housing body (140).

7. The air guidance device (110; 600) according to one of preceding claims 4 or 6, **characterised in that** the heating element and the cooling element are connected in series with respect to an airflow from the air inlet opening (400) and/or the further air inlet opening (400) to the air outlet opening (410).

8. The air guidance device (110; 600) according to one of the preceding claims, **characterised in that** at least one cable (1100), cast in a fluid-tight manner into a sealing element (1110), for supplying electrical power to the air guidance device is provided, wherein the sealing element is connected or is connectable in a fluid-tight manner to the housing body (140) and/or the housing cover (150) via a second seal element (1112).

9. The air guidance device (110; 600) according to claim 8, **characterised in that** the second seal element (1112) comprises a rubber material, in particular ethylene propylene diene rubber.

10. The air guidance device (110; 600) according to one of the preceding claims, **characterised in that** the air guidance device comprises a connection pipeline (120), which is coupled or can be coupled to the housing body by inserting a connecting part (1400) of the connection pipeline into the air inlet opening (400) of the housing body (140), wherein an outer circumference of the connecting part has a larger diameter than an inner circumference of the air inlet opening, and wherein the air guidance device comprises a further connection pipeline (130), which is coupled or can be coupled to the housing body by inserting a further connecting part (1400) of the further connection pipeline into the air outlet opening (410) of the housing body, wherein an outer circumference of the further connecting part has a larger diameter than an inner circumference of the air outlet opening.

11. The air guidance device (110; 600) according to claim 10, **characterised in that** the connecting part (1400) and/or the further connecting part (1400) comprise/comprises a rubber material, in particular ethylene propylene diene rubber.

12. The air guidance device (110; 600) according to one of the preceding claims, **characterised in that** the heat exchanger unit (210) comprises an opening, via which the heat exchanger unit is contacted or can be contacted with the air outlet opening (410) of the housing body (140), wherein a third seal element (1600) is inserted or can be inserted between the opening and the air outlet opening.

13. The air guidance device (110; 600) according to claim 12, **characterised in that** the third seal element (1600) comprises a rubber material, in particular ethylene propylene diene rubber.

14. A method for manufacturing an air guidance device according to at least one of the preceding claims (110; 600) for an electrochemical energy storage unit, wherein the manufacturing method comprises the following steps:
providing a tub-shaped housing body (140) comprising at least one air inlet opening (400) and an air outlet opening (410), wherein the housing body in its interior comprises an air guidance element (200) connected to a base of the housing body, wherein the air inlet opening and the air guidance element are positioned in such a way that air flows from the air inlet opening into an inner region between an inner wall of the housing body and an outer wall of the air guidance element, wherein the air guidance element is designed to receive the air from the inner region via an air-receiving opening and to guide the air out from the housing body through the air outlet opening;
providing a housing cover (150), which is designed to be fitted onto the housing body;
providing a seal element (510), which is designed to be inserted between the housing body and the housing cover; and
connecting the housing body to the housing cover,
wherein the seal element is arranged between the housing body and the housing cover so as to produce the air guidance device.

## Revendications

1. Dispositif de guidage d'air (110; 600) pour un ensemble accumulateur d'énergie électrochimique, où le dispositif de guidage d'air présente les caractéristiques suivantes:
un corps de carter (140) en forme de bac comprenant au moins une ouverture d'entrée d'air (400) et une ouverture de sortie d'air (410), où le corps de carter présente, dans sa partie intérieure, un élément de guidage d'air (200) relié à un fond du corps de carter, où l'ouverture d'entrée d'air et
l'élément de guidage d'air sont positionnés de manière telle, que de l'air provenant de l'ouverture d'entrée d'air circule dans une zone intérieure comprise entre une paroi intérieure du corps de carter et une paroi extérieure de l'élément de guidage d'air, où l'élément de guidage d'air est conçu pour recevoir, via une ouverture de réception d'air, l'air provenant de la zone intérieure et pour faire sortir, via l'ouverture de sortie d'air, l'air provenant du corps de carter;
un couvercle de carter (150) qui est conçu pour être placé sur le corps de carter; et
est **caractérisé par** un élément d'étanchéité (510) qui est conçu pour être introduit entre le corps de carter et le couvercle de carter, ou bien qui est introduit entre le corps de carter et le couvercle de carter, pour former le dispositif de guidage d'air,
où l'élément de guidage d'air présente un ensemble échangeur de chaleur (210), où l'élément de guidage d'air est conçu pour fournir l'air à l'ensemble échangeur de chaleur, où l'ensemble échangeur de chaleur (210) présente un élément chauffant (430, 440) et un élément de refroidissement (430, 440) séparé de l'élément chauffant, où l'élément chauffant et l'élément de refroidissement sont montés en série par rapport à un flux d'air en circulation depuis l'ouverture d'entrée d'air (400) jusqu'à l'ouverture de sortie d'air (410).

2. Dispositif de guidage d'air (110; 600) selon la revendication 1, **caractérisé en ce que** l'élément d'étanchéité (510) présente un matériau en caoutchouc, en particulier un caoutchouc se composant d'éthylène - propylène - diène.

3. Dispositif de guidage d'air (110; 600) selon l'une ou l'autre des revendications précédentes, **caractérisé en ce que** l'ouverture d'entrée d'air (400) et l'ouverture de sortie d'air (410) sont disposées dans des parois latérales différentes du corps de carter (140).

4. Dispositif de guidage d'air (110; 600) selon l'une quelconque des revendications précédentes, **caractérisé en ce que** le dispositif de guidage d'air présente une autre ouverture d'entrée d'air (400) qui est disposée dans une autre paroi latérale du corps de carter (140), ladite autre ouverture d'entrée d'air étant considérée comme l'ouverture d'entrée d'air (400) et l'ouverture de sortie d'air (410).

5. Dispositif de guidage d'air (110; 600) selon l'une des revendications 1 ou 2, **caractérisé en ce que** l'ouverture d'entrée d'air (400) et l'ouverture de sortie d'air (410) sont disposées dans une même paroi latérale du corps de carter (140).

6. Dispositif de guidage d'air (110; 600) selon l'une des revendications 1 ou 2, **caractérisé en ce que** le dispositif de guidage d'air présente une autre ouverture d'entrée d'air (400), où l'ouverture d'entrée d'air (400), l'autre ouverture d'entrée d'air et l'ouverture de sortie d'air (410) sont disposées dans une même paroi latérale du corps de carter (140).

7. Dispositif de guidage d'air (110; 600) selon l'une des revendications précédentes 4 ou 6, **caractérisé en ce que** l'élément chauffant et l'élément de refroidissement sont montés en série par rapport à un flux d'air en circulation, passant de l'ouverture d'entrée d'air (400) et/ou de l'autre ouverture d'entrée d'air (400), à l'ouverture de sortie d'air (410).

8. Dispositif de guidage d'air (110; 600) selon l'une quelconque des revendications précédentes, **caractérisé en ce qu'**il est prévu au moins un câble (1100) scellé - en étant étanche aux fluides - dans un élément d'étanchéité (1110) et servant à l'alimentation du dispositif de guidage d'air en courant électrique, où l'élément d'étanchéité est raccordé ou bien peut être raccordé - en étant étanche aux fluides - au corps de carter (140) et/ou au couvercle de carter (150), par un deuxième élément d'étanchéité (1112).

9. Dispositif de guidage d'air (110; 600) selon la revendication 8, **caractérisé en ce que** le deuxième élément d'étanchéité (1112) présente un matériau en caoutchouc, en particulier un caoutchouc se composant d'éthylène - propylène - diène.

10. Dispositif de guidage d'air (110; 600) selon l'une quelconque des revendications précédentes, **caractérisé en ce que** le dispositif de guidage d'air présente une conduite de raccordement (120) qui, par emboîtement d'une pièce de raccordement (1400) de la conduite de raccordement dans l'ouverture d'entrée d'air (400) du corps de carter (140), est accouplée ou bien peut être accouplée au corps de carter, où une circonférence extérieure de la pièce de raccordement présente un diamètre plus grand qu'une circonférence intérieure de l'ouverture d'entrée d'air, et où le dispositif de guidage d'air présente une autre conduite de raccordement (130) qui, par emboîtement d'une autre pièce de raccordement (1400) de l'autre conduite de raccordement dans l'ouverture de sortie d'air (410) du corps de carter, est accouplée ou bien peut être accouplée au corps de carter, où une circonférence extérieure de l'autre pièce de raccordement présente un diamètre plus grand que celui d'une circonférence intérieure de l'ouverture de sortie d'air.

11. Dispositif de guidage d'air (110; 600) selon la revendication 10, **caractérisé en ce que** la pièce de raccordement (1400) et/ou l'autre pièce de raccordement (1400) présente un matériau en caoutchouc, en particulier un caoutchouc se composant d'éthylène - propylène - diène.

12. Dispositif de guidage d'air (110; 600) selon l'une quelconque des revendications précédentes, **caractérisé en ce que** l'ensemble échangeur de chaleur (210) présente une ouverture par laquelle l'ensemble échangeur de chaleur est en contact ou bien peut être mis en contact avec l'ouverture de sortie d'air (410) du corps de carter (140), où un troisième élément d'étanchéité (1600) est introduit ou bien peut être introduit entre l'ouverture et l'ouverture de sortie d'air.

13. Dispositif de guidage d'air (110; 600) selon la revendication 12, **caractérisé en ce que** le troisième élément d'étanchéité (1600) présente un matériau en caoutchouc, en particulier un caoutchouc se composant d'éthylène - propylène - diène.

14. Procédé de fabrication pour la fabrication d'un dispositif de guidage d'air (110; 600) pour un ensemble accumulateur d'énergie électrochimique selon au moins l'une quelconque des revendications précédentes, où le procédé de fabrication présente les étapes suivantes consistant:
à fournir un corps de carter (140) en forme de bac comprenant au moins une ouverture d'entrée d'air (400) et une ouverture de sortie d'air (410),
où le corps de carter présente, dans sa partie intérieure, un élément de guidage d'air (200) raccordé à un fond du corps de carter, où l'ouverture d'entrée d'air et l'élément de guidage d'air sont positionnés de manière telle, que de l'air provenant de l'ouverture d'entrée d'air circule dans une zone intérieure comprise entre une paroi intérieure du corps de carter et une paroi extérieure de l'élément de guidage d'air, où l'élément de guidage d'air est conçu pour recevoir, via une ouverture de réception d'air, l'air provenant de la zone intérieure et pour faire sortir, via l'ouverture de sortie d'air, l'air provenant du corps de carter;
à fournir un couvercle de carter (150) qui est conçu pour être placé sur le corps de carter;
à fournir un élément d'étanchéité (510) qui est conçu pour être introduit entre le corps de carter et le couvercle de carter;
et, pour produire le dispositif de guidage d'air,
procéder à l'assemblage du corps de carter et du couvercle de carter, l'élément d'étanchéité étant disposé entre le corps de carter et le couvercle de carter.
